# EUROPEAN PATENT APPLICATION

(11) **EP 3 912 705 A1**
(43) Date of publication of application: **24.11.2021**
(21) Application number: 20175863.8
(22) Date of filing: 20.05.2020
(51) Int. Cl.: B01D 53/28

(54) **A DEHUMIDIFYING COMPOSITION**

(71) Applicant: Birch Chemicals Limited, Barnetby, North Lincolnshire DN38 6AE (GB)
(72) Inventor: MEYER, Christopher Raymond, Lincolnshire, DN38 6AE (GB); KOCSIS, David, Lincolnshire, DN38 6AE (GB); ORSI, Joe, Lincolnshire (GB)
(74) Representative: Patent Boutique LLP

(57) **Abstract**

The present invention relates to a dehumidifying composition comprising:
(i) from 10wt% to 75wt% CaCl₂;
(ii) from 1wt% to 40wt% CaO;
(iii) from 1wt% to 60wt% pozzolanic material; and
(iv) optionally, from 0.2wt% to 30wt% pigment-based particulate indicator system,
wherein the CaCl₂ has a dso particle size of less than 300µm,
wherein the CaO has a dso particle size of less than 100µm,
wherein the pozzolanic material has a dso particle size of less than 100µm, wherein greater than 90wt% of the particles present in the composition are less than 710µm, and
wherein upon dilution in de-ionized water at a concentration of 20w/v% and at a temperature of 20°C, the composition has a pH of greater than 10.0.

## Description

### Field of the invention

The composition provides a dehumidifying composition. The composition has enhanced in-use safety features such as anti-spill and anti-corrosion features. The composition may also have a moisture indicator system to show when the dehumidifying composition is saturated and no longer has desiccating properties. The indicator system is simple to produce, compatible with the chemistry of the composition and has potential re-use capability.

### Background of the invention

The present invention seeks to provide a dehumidifying composition having good processability, transportability and stability especially during storage and transport, and that has good performance during use. Upon use, the composition has good self-hardening properties, reducing or even eliminating any leakage of the composition from its container, such as a sachet, in the event of accidental rupture.

If accidental leakage does occur, the composition also has desirable (low) corrosive properties, showing reduced tendency to corrode steel surfaces, such as the insides of shipping containers, even when wet.

The composition is also suitable for the inclusion of an optimal visual indicator system that communicates to the user once the composition has been used (hydrated) and needs replacing.

The present invention carefully controls the chemistry (including amounts), pH and the particle size of the composition (and components thereof) to achieve the above objectives.

Calcium chloride (CaCl₂) is used as a desiccant due to its highly hygroscopic nature. CaCl₂ absorbs moisture over time and forms a concentrated solution, i.e. it is deliquescent. This mechanism needs to be managed carefully by the composition to avoid any corrosion and safety issues if this concentrated solution leaks. Without wishing to be bound by theory, the inventors believe that such corrosion is due to the presence of high levels of chloride ions and the relatively low pH environment of concentrated CaCl₂ solutions.

Calcium oxide (CaO) is also present in the composition. The CaO is also used as a desiccant, although it is not as effective as CaCl₂ in many situations. However, the presence of CaO raises the pH of the composition. This acts to protect against corrosion in the event any unwanted leakage of the concentrated solution occurs, especially if the liquid contacts to a steel surface. Without wishing to be bound by theory, the inventors believe that the relatively high pH reduces or even eliminates the corrosive properties of the concentrated solution formed.

Pozzolanic material is also present in the composition to help the composition self-harden, or stiffen, during use. This helps reduce, or even prevent, leakage of any concentrated solution formed. It also reduces the likelihood of accidental rupture if a desiccant package containing the dehumidifying mixture is dropped. Without wishing to be bound by theory, the inventors believe that the pozzolanic material reacts with calcium hydroxide (which is formed during use) to form a bonding material, perhaps a silicate-based bonding material, that hardens or stiffens the composition. The level of pozzolanic material, and indeed the CaO as well, can be adjusted to vary the properties of the composition and level of self-hardening. The self-hardening feature is enhanced by the CaO and the pozzolanic material having similar, and relatively fine, particle sizes.

Optionally, the composition may also comprise a pigment-based particulate indicator system that can visually indicate to the user when the composition is used up, for example the pigment changes from a lighter shade of colour (when dry) to a darker shade of colour (when wet). Without wishing to be bound by theory, the inventors believe that when the composition is dry, light will be reflected back from many surfaces in the powder mix giving the pigment-based particulate indicator system a lighter appearance and shade. However, when liquid is present on the surface of particles of the composition (e.g. after use), the light will not be as readily reflected due to the refractive behaviour of the liquid and more light will fall on the pigment-based particulate indicator system and be absorbed. Hence the composition will appear darker when water is present. The composition can be packaged for use in a bag or sachet that has a viewing window of transparent film so as to allow easy visual confirmation of the colour of the composition. Such a sachet or bag can include a colour guide attached to the sachet or bag to aid in colour assessment.

CaCl₂, CaO and pozzolanic materials are often supplied with a wide particle size distribution. The inventors have found that controlling the particle size of the composition, and its individual components, improves the efficiency and performance of the dehumidifying composition, especially after transport and storage. Large CaCl₂ particles can segregate during packing and cause unwanted variability in composition as well as displaying poorer performance than smaller particles. The CaCl₂ particles can be larger than the other component particles due to their deliquescent nature. However, gross mismatches between the CaCl₂ particle size and the particle sizes of the other components (such as CaO and pozzalanic material) should be avoided.

As mentioned above, controlling the pH of the composition provides reduced corrosion properties.

The present invention provides a dehumidifying composition based on CaCl₂ that has improved robustness and corrosion profiles when used in a desiccant package, such as those used to control humidity in shipping containers, and that is easy and simple to manufacture.

### Summary of the invention

The present invention provides a dehumidifying composition comprising:
(i) from 10wt% to 75wt% CaCl₂;
(ii) from 1.0wt% to 40wt% CaO;
(iii) from 1.0wt% to 60wt% pozzolanic material; and
(iv) optionally, from 0.2wt% to 30wt% pigment-based particulate indicator system,
wherein the CaCl₂ has a dso particle size of less than 300µm,
wherein the CaO has a dso particle size of less than 100µm,
wherein the pozzolanic material has a dso particle size of less than 100µm,
wherein greater than 90wt% of the particles present in the composition are less than 710µm, and
wherein upon dilution in de-ionized water at a concentration of 20w/v% and at a temperature of 20°C, the composition has a pH of greater than 10.0.

### Detailed description of the invention

**Dehumidifying composition.** The dehumidifying composition comprises:
(i) from 10wt% to 75wt% CaCl₂;
(ii) from 1.0wt% to 40wt% CaO;
(iii) from 1.0wt% to 60wt% pozzolanic material; and
(iv) optionally, from 0.2wt% to 30wt% pigment-based particulate indicator system.

The CaCl₂ has a d₅₀ particle size of less than 300µm. The CaCl₂ is described in more detail below.
The CaO has a d₅₀ particle size of less than 100µm. The CaO is described in more detail below.
The pozzolanic material has a dso particle size of less than 100µm. The pozzolanic material is described in more detail below.
Greater than 90wt%, or greater than 95wt%, or greater than 99wt%, or even all, of the particles present in the composition are less than 710µm, or less than 600µm, or less than 500µm.
Upon dilution in de-ionized water at a concentration of 20w/v% and at a temperature of 20°C, the composition has a pH of greater than 10.0, or greater than 10.5, or greater than 11.0.

Preferably, feature (iv) is essential and the composition comprises from 0.2wt% to 30wt% pigment-based particulate indicator system.

A preferred composition comprises:
(i) from 40wt% to 60 wt% CaCl₂;
(ii) from 20wt% to 30 wt% CaO;
(iii) from 20wt% to 40 wt% pozzolanic material; and
(iv) optionally, from 0.2wt% to 5.0 wt% pigment-based particulate indicator system.

Another preferred composition comprises:
(i) from 60wt% to 75wt% CaCl₂;
(ii) from 1.0wt% to 25 wt% CaO;
(iii) from 1.0wt% to 20 wt% pozzolanic material; and
(iv) optionally, from 0.2wt% to 5.0 wt% pigment-based particulate indicator system.

**Calcium chloride.** The composition comprises from 10wt% to 75wt% calcium chloride (CaCl₂), or preferably from 20wt% to 60%, or even more preferably from 30wt% to 55wt% CaCl₂. The dso particle size of the CaCl₂ is less than 300µm, preferably less than 250µm, preferably less than 200µm, preferably less than 150µm or even more preferably less than 100µm. The CaCl₂ can be either in anhydrous form or partially hydrated such as the dihydrate salt. The anhydrous form is preferred.

**Calcium oxide.** The composition comprises from 1.0wt% to 40wt% calcium oxide (CaO), or preferably from 5.0wt% to 35wt%, or even more preferably from 20wt% to 30wt% CaO. The dso particle size of the CaO is less than 100µm, preferably less than 50µm, even more preferably less than 30µm, and most preferably less than 20µm.

**Pozzolanic material.** The composition comprises from 1.0wt% to 60wt% pozzolanic material, or preferably from 5.0wt% to 50% pozzolanic material, or preferably from 20wt% to 40wt% pozzolanic material. The dso particle size of the pozzolanic material is less than 100µm, preferably less than 80µm, or even more preferably less than 60µm.

Pozzolanic material is typically a siliceous or siliceous and aluminous material (such as an aluminosilicate) that in itself possesses little or no cementitious value but will, and especially in finely divided form and in the presence of moisture, chemically react with calcium hydroxide at ambient temperatures to form compounds having cementitious properties.

Preferably, the pozzolanic material is selected from type F fly ash, ground glass cullet, perlite, and any mixtures thereof.

**Pigment-based particulate indicator system.** The composition optionally comprises from 0.2wt% to 30wt% pigment-based particulate indicator system, or preferably from 0.3wt% to 25wt% pigment-based particulate indicator system. The dso particle size of the pigment-based particulate indicator system is preferably less than 10µm, preferably less than 5.0µm, or even more preferably less than 2.0µm.

Suitable pigment-based particulate indicator systems are selected from water in-soluble particles containing greater than 20wt% metal oxides, especially iron oxides. The higher the metal oxide level, the darker the resulting particles are. For example, articles with higher levels of iron oxide need to be added at lower concentrations to achieve a useful change in colour. Iron oxides are insoluble in high pH conditions and this helps ensure that there are no unwanted reactions between the pigment particles and the concentrated calcium chloride solution. The term "metal oxide" covers mixtures of oxide and hydroxides.

A preferred metal oxide is iron oxide and the iron level in such materials is typically reported as "Fe₂O₃" and measured by X-Ray Fluorescence (XRF). The technique works by the excitation of the sample using high energy gamma or X-rays. This causes an ionisation of the atoms present which then emit characteristic frequency EM radiation which is dependent on the type of atom. Analysis of the intensity of different frequencies allows an elemental analysis to be made. Suitable equipment would be the Varta range of XRF analyzers supplied by Olympus. The equipment detects elemental iron and the result is most usually converted to the corresponding level of Fe₂O₃.

A preferred pigment based particulate indicator system is an iron oxide-based material. Suitable iron-oxide based materials are Bayferrox pigments™ supplied by Lanxess. Such pigments have a very high colour intensity due to their high iron oxide levels, typically over 80wt% and can be added at low levels, for example 0.5wt%. Such pigments will typically need to be pre-dispersed so as to get sufficient uniformity of coverage.

A preferred pigment based particulate indicator system is a high iron-oxide clay. High iron oxide clays typically contain iron oxide levels of greater than 10wt% as measured by XRF and can be used as pigments. Many types and sources of clay, such as earthenware clays, contain high levels of iron oxide and often need treatment to reduce this prior to other uses. Such materials can be micronized and can optionally be calcined prior to use. This can aid in re-use.

**Method of measuring particle size.** The particle size distribution is typically measured by laser diffraction. A suitable standard for size analysis by laser diffraction is given in ISO 13320:2009. Suitable size analysers are the Mastersizer 2000 and 3000 instruments by Malvern Instruments. It is preferred to disperse the samples by compressed air (usually with a Scirocco 2000 unit) where the material is tested as a powder stream, rather than the wet method where the test material is dispersed in a fluid first. However, it is possible to disperse and test these materials in non-aqueous liquids. The measurement is typically done as per the manufacturer's instruction manual and test procedures.

The results are typically expressed in accordance with ISO 9276-2.

### Examples

A desiccant package is prepared as follows:
The following materials are mixed in a kitchen mixer (Hobart A200) for 20 seconds.
1. 250g CaCl₂ dihydrate powder (Caso Tec supplied by Solvay having a dso of less than 300 microns).
2. 125g CaO (Innovox FG, supplied by Birch Chemicals Ltd having a dso particle size of 4.6 microns).
3. 120g of fine Perlite (Silvaperl Perlite Grade PO5) supplied by Hoben International Ltd of Matlock, UK with a d₅₀ particle size of less than 100 microns.

The dye indicator system was prepared as follows:
2.5g of BayFerrox 130M iron-oxide based red pigment (supplied by Lanxess) was pre-mixed by hand with 2.5g of the perlite used above.

This mixture was then added to and dispersed into the mixture above by mixing in the Hobart mixer for a further 60 seconds.

After mixing, 95.5wt% of the mixture passed through a 710 micron sieve.

When diluted in de-ionized water to a concentration of 20w/v% at 20°C, the pH of the composition was 10.6.

200g of this mixture was then placed in a cloth bag and allowed to pick up moisture over 552 hours in a 50% relative humidity, 20°C environment. After 552 hrs, the sample had increased in weight by 185g and was now a darker shade that could be readily distinguished from the lighter starting material. The test sample has become hard to the touch and there was no evidence of any liquid leakage. It was noticeable that the mixture began to harden within 24 hours of being exposed to the humid atmosphere. The solidified mixture maintained its shape and integrity even when the package was dropped repeatedly from 1m height.

## Claims

1. A dehumidifying composition comprising:
(i) from 10wt% to 75wt% CaCl₂;
(ii) from 1.0wt% to 40wt% CaO;
(iii) from 1.0wt% to 60wt% pozzolanic material; and
(iv) optionally, from 0.2wt% to 30wt% pigment-based particulate indicator system,
wherein the CaCl₂ has a d₅₀ particle size of less than 300µm,
wherein the CaO has a d₅₀ particle size of less than 100µm,
wherein the pozzolanic material has a d₅₀ particle size of less than 100µm,
wherein greater than 90wt% of the particles present in the composition are less than 710µm, and
wherein upon dilution in de-ionized water at a concentration of 20w/v% and at a temperature of 20°C, the composition has a pH of greater than 10.0.

2. A composition according to any preceding claim, wherein feature (iv) is essential and the composition comprises from 0.2wt% to 30wt% pigment-based particulate indicator system.

3. A composition according to any preceding claim, wherein the pozzolanic material is selected from silicon dioxide-based materials.

4. A composition according to any preceding claim, wherein the pozzolanic material is selected from type F fly ash, ground glass cullet, perlite, and any mixtures thereof.

5. A composition according to any preceding claim, wherein the pigment-based particulate indicator system is an iron-oxide based material.

6. A composition according to any preceding claim, wherein the pigment-based particulate indicator system is an inorganic metal oxide pigment.

7. A composition according to any preceding claim, wherein the pigment-based particulate indicator system is a high iron-oxide clay.

8. A composition according to any preceding claim, wherein the composition comprises:
(i) from 40wt% to 60wt% CaCl₂;
(ii) from 20wt% to 30wt% CaO;
(iii) from 20wt% to 40wt% pozzolanic material; and
(iv) optionally, from 0.2wt% to 5.0wt% pigment-based particulate indicator system.

9. A composition according to any of claims 1-7, wherein the composition comprises:
(i) from 60wt% to 75wt% CaCl₂;
(ii) from 1.0wt% to 25wt% CaO;
(iii) from 1.0wt% to 20wt% pozzolanic material; and
(iv) optionally, from 0.2wt% to 5.0wt% pigment-based particulate indicator system.

10. A composition according to any preceding claim,
wherein the d₅₀ particle size of each component (i), (ii) and (iii) is between 5.0µm and 100µm,
wherein the dso particle size of the composition is less than 100µm, and
wherein all of the particles present in the composition are less than 500µm.

11. A composition according to any preceding claim, wherein upon dilution in de-ionized water at a concentration of 20w/v% and at a temperature of 20°C, the composition has a pH of greater than 10.5.
